# EUROPÄISCHE PATENTSCHRIFT

(11) **EP 2 657 199 B1**
(45) Veröffentlichungstag und Bekanntmachung des Hinweises auf die Patenterteilung: **31.05.2017**
(21) Anmeldenummer: 13165544.1
(22) Anmeldetag: 26.04.2013
(51) Int. Cl.: C03B 7/00, C03B 7/16, C03B 9/195

(54) **VORRICHTUNG ZUR HERSTELLUNG VON HOHLKÖRPERN AUS EINER GLASSCHMELZE**
DEVICE FOR THE MANUFACTURE OF HOLLOW ARTICLES FROM A GLASS MELT
DISPOSITIF DESTINÉ À LA FABRICATION DE CORPS CREUX À PARTIR D'UN BAIN DE VERRE

(30) Priorität: 27.04.2012 DE 102012103773
(43) Veröffentlichungstag der Anmeldung: 30.10.2013
(60) Teilanmeldung: 15179026.8
(73) Patentinhaber: Waltec Maschinen GmbH, 96352 Wilhelmsthal-Steinberg (DE)
(72) Erfinder: Höfer, Britta, 96342 Stockheim (DE); Bassing, Werner, 96364 Marktrodach (DE); Höllwarth, Falk, 96515 Sonneberg (DE); Gareis, Harald, 96349 Steinweisen (DE); Wagner, Rainer, 95032 Hof (DE)
(74) Vertreter: LS-MP von Puttkamer Berngruber Loth Spuhler

(56) Entgegenhaltungen:
- EP-A1- 0 915 269
- WO-A1-02/064517
- DE-T2-602004 008 092
- FR-A- 567 027
- FR-A1- 2 938 254
- US-A- 3 910 419
- US-A- 5 818 190
- US-A- 6 079 226
- US-A1- 2005 005 647
- SCHWARZER S: "SERVO ELECTRIC HOT END SYSTEMS//MECANISMES SERVO-ELECTRIQUES EN BOUT CHAUD", VERRE, INSTITUT DU VERRE, PARIS, FR, vol. 11, no. 3, 1 June 2005 (2005-06-01), pages 23-26, XP001233514, ISSN: 0984-7979
- "SYSTEME DE COMMANDE FLEXIS", VERRE, INSTITUT DU VERRE, PARIS, FR, vol. 11, no. 3, 1 June 2005 (2005-06-01), page 14/15, XP001233510, ISSN: 0984-7979
- GRUENINGER W ET AL: "MODELLING, DESIGN AND IMPLEMENTATION OF A SERVO-ELECTRIC PLUNGER MECHANISM FOR GLASS CONTAINER FORMING MACHINES", GLASS TECHNOLOGY, SOCIETY OF GLASS TECHNOLOGY, SHEFFIELD, GB, vol. 43, no. 3, 1 June 2002 (2002-06-01), pages 89-94, XP001123096, ISSN: 0017-1050
- ANONYMOUS ET AL: 'Dezentrale Antriebstechnik - (k)ein neuer Trend - automation', [Online] 01 März 2008, XP055300290 Gefunden im Internet: <URL:http://www.automationnet.de/index.cfm? pid=1702&pk=75787#.V87DQWP4IqM> [gefunden am 2016-09-06]
- REINHARD KLUGER: 'Zentral vs. dezentral', [Online] 10 März 2008, XP055300296 Gefunden im Internet: <URL:http://www.elektrotechnik.vogel.de/zen tral-vs-dezentral-a-111496/> [gefunden am 2016-09-06]

## Beschreibung

Die Erfindung betrifft eine Vorrichtung zur Herstellung von Hohlkörpern aus einer Glasschmelze mit wenigstens einem kühlbaren, wenigstens einen Antrieb aufweisenden Trägermechanismus, der mittels eines Trägers eine Vorform, die der Aufnahme eines Tropfens einer Glasschmelze dient, zwischen wenigstens zwei Arbeitspositionen bewegt. Weiterhin betrifft die Erfindung eine Vorrichtung zur Herstellung von Hohlkörpern aus einer Glasschmelze, bei der der Trägermechanismus in analoger Form der Zuführung eines den Kölbel unterstützenden Bodens dient.

Aus der DE 60 2004 008 092 T2 ist eine Press-Blasmaschine bekannt, die zur Herstellung hohler Glaswaren, Bechergläser oder Weingläser dient. Die Press-Blasmaschine umfasst ein Karussell, das eine Vielzahl von Blasstationen trägt, von denen jede zum Aufnehmen von Vorformen ausgebildet ist. Die Press-Blasmaschine umfasst weiterhin einen Vorformhalter zur Aufnahme eines Glasrohlings, einen Halsring zum Halten des Glasrohlings und eine Antriebseinrichtung, die dazu dient, eine formgebende Einheit aus einer Stillstandsposition in einen Transferbereich zu versetzen.

Aus der DE 10 2009 039 741 A1 ist eine Vorformstation einer Glasmaschine bekannt. Die Vorformen der Glasmaschine weisen Vorformhälften auf, die aus einer geöffneten in eine geschlossene Stellung verstellbar sind. In geschlossener Stellung der Vorformhälften ist ein Glastropfen in die Vorform einführbar. Oberhalb der Vorformen ist an der Vorformstation eine Schmiervorrichtung angeordnet, die aus einer Ruhestellung in eine Betriebsstellung verstellbar ist. Mittels der in Betriebsstellung befindlichen Schmiervorrichtung sind die Innenflächen der Vorformen der Vorformstation mit Schmiermittel beaufschlagbar.

Die EP 0 915 269 A1 offenbart einen Hebe- und Drehmechanismus für eine IS-Glasverarbeitungsmaschine mit einem Kolben, der axial bewegbar ist und eine Nockenrolle trägt. Die Nockenrolle verläuft in einer Nockenführungsbahn, welche die Drehbewegung bewirkt.

Bei derartigen Maschinen zur Herstellung von Glaskörpern wird häufig u.a. ein Karussell eingesetzt. Bei einem Umlauf des Karussells wird ein Tropfen aus einer Glasschmelze über eine Zuführungseinrichtung einer Vorform zugeführt. Die Vorform steht dabei regelmäßig mit einer der Formung des Hohlkörpers dienenden Einrichtung, insbesondere einer Presseinrichtung, einem Neckring sowie einer Blaseinrichtung in Zusammenhang. Die Formung eines Hohlkörpers aus einer Glasschmelze erfolgt in der Weise, dass zunächst der Kölbel hergestellt wird. Dies geschieht dadurch, dass der Glastropfen im Zusammenwirken mit der sogenannten Vorform, Neckring und einem sogenannten Plunger zum Kölbel gepresst wird. In einem sich daran anschließenden Verfahrensteilakt wird der Kölbel mittels der Blaseinrichtung unter deren Zusammenwirken mit Neckring, sogenanntem Boden und Fertigform zum Hohlkörper geformt. Dabei kann der sogenannte Boden durch einen vordefinierten Bewegungsablauf unter den Kölbel bewegt werden. Durch die vertikale Bewegung des Bodens unter dem sich durch Schwerkraft auslängenden Kölbel kann die Formung der Hohlkörper vorangetrieben. Weiterhin erfolgt die Fertigformung des Hohlkörpers durch eine Blaseinrichtung.

Die vorliegende Erfindung befasst sich mit der Ausgestaltung des Vorformträgermechanismus respektive der mit ihm in Zusammenhang stehenden Bauteile, insbesondere mit dem Bodenträgermechanismus.

Bei weiteren im Stand der Technik bekannten Vorrichtungen zur Herstellung von Glaskörpern werden zur Bewegung der Vorform in der Regel großvolumige Zylinder eingesetzt, welche die Vorform vertikal zwischen einer ersten Endstellung, nämlich der Tropfenzuführungsposition, und einer zweiten Endstellung, nämlich der Pressposition, bewegen. Diese großvolumigen Zylinder haben durch die eingesetzte Pressluft einen sehr hohen Energieverbrauch. Eine integrierte Kurvenmechanik verschwenkt dabei die Vorform zwischen der Tropfenzuführungsposition und der Pressposition. Um zufriedenstellende Produktionsergebnisse zu erzielen, müssen bei bekannten Vorrichtungen zur Herstellung von Glaskörpern diese Endstellungen exakt angefahren werden. Hierzu werden feste und einstellbare formschlüssige Führungen und Zentrierungen eingesetzt. Es ist gleichermaßen von Bedeutung, dass die Endstellungen weich angefahren werden. Die im Stand der Technik eingesetzten großvolumigen pneumatischen Zylinder verfügen über nicht ausreichende Dämpfungseigenschaften, um die Positionen weich anzufahren.

Um dies zu erreichen, werden im Stand der Technik in der Regel ölhydraulische Dämpfungselemente verwendet, die ihrerseits kostenintensiv und störanfällig sind, die aber bei notwendig werdenden Reparaturen bzw. Einstellungen schwer zugänglich sind.

Der Einsatz großvolumiger pneumatischer Zylinder erweist sich als nachteilig, da sich aufgrund der stetig ändernden Reibung, der erforderlichen Schmierung sowie des Verschleißes an Dichtungs- und Führungselementen die Zylindergeschwindigkeit und damit die verbundene kinetische Energie der vom Zylinder bewegten Masse ständig verändert. Es ist daher erforderlich, neben der Korrektur der Geschwindigkeit auch die Einstellung der hydraulischen Dämpfer zu verändern. Eine regelmäßige Nachjustierung der Einstellungen ist aufgrund des Verschleißes auch an den Führung und Zentrierungen erforderlich. Bei aus dem Stand der Technik bekannten Vorrichtungen zur Glasherstellung ist die Justierung der Einstellung bei laufendem Betrieb jedoch nicht möglich. Teilweise sind die einzustellenden Elemente ohne Demontage von Abdeckungen überhaupt nicht zugänglich. Überdies erfordert die Demontage der Abdeckungen die Stillsetzung der Maschine. Der Zeitdruck, die Maschine möglichst schnell wieder in Betrieb zu nehmen, führt zu einem weiteren Gefährdungspotential.

Die bei derartigen Vorrichtungen im Stand der Technik seit Jahrzehnten eingesetzten großvolumigen pneumatischen Zylinder erweisen sich schädlich für die Umwelt und die Maschinenbediener. Zur Reduzierung des Verschleißes erfordern sie eine intensive Schmierung mit Schmieröl. Ein Großteil des zugeführten Schmieröls wird durch den zyklischen Austausch der Luft mit der Umgebung wieder der Umgebungsluft zugeführt. Die Luft, die der Maschinenbediener einatmet, ist daher kontinuierlich durch Schmieröl kontaminiert. Stäube und abrasive Verlustanteile an eingesetzten Materialien sowie Ablagerungen an den Maschinen sind an diesen Vorrichtungen erfahrungsgemäß hoch. Verbindungen aus Ablagerungen und ölhaltiger Luft, die von den Zylindern ausgestoßen werden, ergeben ein hohes Unfallgefährdungspotential durch Rutschgefahr und sind darüber hinaus sehr leicht entzündlich.

Bei aus dem Stand der Technik bekannten Vorrichtungen wird zudem versucht, die Lageorientierung (Winkel) der Vorform in der Tropfenzuführungsposition und in der Pressposition durch Gleitführungen zu realisieren. Die Gleitführungen unterliegen aufgrund ihres Wirkprinzips erhöhtem Verschleiß und sind daher sehr wartungsintensiv. Prinzipiell umfassen die Gleitführungen mindestens zwei Bauelemente (sog. Nut und Feder). Mindestens ein Bauelement greift dabei in das zweite Bauelement ein. Im Stand der Technik ist Feder fest am Vorform-Träger montiert und bewegt sich gemeinsam mit der Vorform in einer Schwenk-und Höhenbewegung. Die Nut ist am Gehäuse des Vorform-Trägermechanismus befestigt und ist in seiner Position ortsfest in Bezug auf die Vorform und den Vorform-Träger. Bei der Höhen-und Schwenkbewegung fährt die Feder in die Nut ein. Beide Bauteile sind zueinander in Bezug auf ihre Maße toleriert, wodurch die Lage der Vorform in den Arbeitspositionen exakt bestimmt ist. Durch die engen Toleranzen dieser beiden Bauteile (Nut und Feder), welche gleitend ineinander verfahren, entsteht hoher Verschleiß. Hierdurch vergrößern sich bei Einsatz derartiger Gleitführungen die Toleranzen abermals, wodurch die Lagegenauigkeit, nämlich die Mitte der Vorform gegenüber der Tropfenzuführungseinrichtung und gegenüber der Presseinrichtung, erheblich sinkt.

Es ist daher die Aufgabe der Erfindung, eine technisch vereinfachte und kostengünstige Vorrichtung zur Herstellung von Hohlkörpern aus einer Glasschmelze zu bereitzustellen, mit der ein Verzicht auf hydraulische Dämpfer sowie eine energetische Einsparung möglich ist. Weiterhin wird eine Standardisierung von Bauteilen angestrebt. Gleichzeitig soll eine verbesserte Reproduzierbarkeit der Betriebsabläufe der Maschine erreicht werden, die insgesamt zu einer Leistungsverbesserung führt. Eine weitere Aufgabe der Erfindung liegt darin, eine Früherkennung von Fehlern zu erreichen, wodurch eine vorausschauende Wartung möglich ist. Insgesamt soll die Belastung der Maschinenbediener am Arbeitsplatz sowie die Unfallgefahr durch die Erfindung wesentlich verbessert werden. Zusätzlich soll eine einfache und unkomplizierte Umschaltung des Bewegungsablaufes erreicht werden, ohne die Genauigkeit der Bewegung zu verlieren.

Die Aufgabe wird gelöst durch die Merkmale des Patentanspruchs 1.

Zahlenbeispiele in dieser Beschreibung sind rein beispielhaft und in keiner Weise ausschließlich oder einschränkend gemeint.

Die Erfindung sieht eine Vorrichtung zur Herstellung von Hohlkörpern aus einer Glasschmelze vor, die wenigstens einen einen Antrieb aufweisenden Trägermechanismus umfasst. Der Antrieb ist vorzugsweise kühlbar. Der Trägermechanismus bewegt mittels eines Trägers eine Vorform, die der Aufnahme eines Tropfens einer Glasschmelze zwischen zwei Arbeitspositionen dient. Dabei ist der wenigstens eine Antrieb des Trägermechanismus wenigstens ein Servoantrieb. Zusätzlich ist zur Führung des Trägers wenigstens eine rollende Führung und Zentrierung vorgesehen. Die Kühlung der Vorform und/oder wird mittels Luftkühlung und/oder Wasserkühlung bewirkt. Insbesondere kann Umgebungsluft insbesondere mittels eines Gebläses verwendet werden.

Hingegen wird im Stand der Technik bei derartigen Vorrichtungen zur Kühlung der Vorform und/oder des Bodens und/oder der damit verbundenen Arbeitselemente Druckluft bzw. Pressluft eingesetzt. Diese Kühlweise ist kostenintensiv und konstruktiv aufwendig in der Bereitstellung. Diese Nachteile werden bei der erfindungsgemäß vorgeschlagenen Lösung vermieden.

Weiterhin ist vorgesehen, dass der der Bewegung der Vorform zwischen den Arbeitspositionen dienende Trägermechanismus in analoger Form der Zuführung eines den Kölbel unterstützenden Bodens dient.

Die Trägermechanismen für die Vorform und für den den Kölbel-unterstützenden Boden sind dabei prinzipiell gleich aufgebaut und werden deshalb nachfolgend - soweit nicht anders dargestellt - zusammenfassend abgehandelt. Durch diesen prinzipiell gleichartigen Aufbau können die entsprechenden Maschinenbauteile kostengünstig hergestellt, standardisiert und auch gegebenenfalls ausgetauscht werden. Beide Trägermechanismen werden in verschiedenen Maschinenapparaturen sowie an verschiedenen Stellen in der räumlichen Anordnung der Gesamtmaschine zur Herstellung von Hohlkörpern aus einer Glasschmelze angeordnet.

Die jeweiligen Träger beider Trägermechanismen für Vorform und Boden sind ihrer Zweckbestimmung entsprechend konstruktiv unterschiedlich ausgebildet.

Unter Servoantrieb im Sinne der Erfindung wird insbesondere jeglicher Antrieb mit elektronischer Lage-, Geschwindigkeits- oder Momentregelung oder eine Kombination derselben verstanden. Der Servoantrieb und seine verschiedenen Ausführungsformen sind an sich bekannt. Die Verwendung eines Servoantriebes ermöglicht eine vorausschauende Wartung. Zu jeder Produktionseinstellung sind die aktuellen Betriebszustände, Grenzwerte, Schleppfehler und/oder Stromaufnahmen speicherbar. Referenzdaten werden mit Daten des aktuellen Betriebszustands verglichen. Auf diese Weise können Meldungen und Warnungen vor Eintritt eines Störfalls generiert werden. Überprüfungen oder Wartungen des Systems werden vor dem Störfall ausgelöst, wodurch Revisionen planbar sind und Produktionsausfälle und Reparaturkosten minimiert werden können.

Die Erfindung sieht weiterhin vor, dass der Servoantrieb ein servoelektrischer Antrieb ist. Der Servoantrieb wird eingesetzt, um die im Stand der Technik verwendeten großvolumigen pneumatischen Zylinder zu ersetzen. Servoelektrische Antriebe sind zum Beispiel als Linearmotoren, Torquemotoren, konventionelle Motoren mit Ritzel-Zahnstange, Kniehebel-, Kurvenscheiben- oder Kurbelantrieb ausgeführt.

Der servoelektrische Antrieb ist vorzugsweise ein dezentraler Antrieb, auch genannt Feldbusservorantrieb. Hierdurch sind Schaltschränke, welche einer hohen Temperaturbelastung ausgesetzt sind, nicht weiter erforderlich. Hierdurch wird insbesondere für Wartungsarbeiten der Zugang zu z.B. sich im inneren Bereich der Maschine befindlichen Bauteile erleichtert.

Vorzugsweise vorgesehen ist, dass der servoelektrische Antrieb ein Torquemotor und/oder ein Linearmotor ist. Insbesondere bevorzugt ist ein Torquemotor, wenn die Antriebskinematik die Antriebsenergie in rotatorischer Form benötigt. Weiter kommt als geeignet ein konventioneller Motor in Betracht. Diese Antriebe können weiter bevorzugt Ritzel-Zahnstange aufweisen. Diese Antriebe können weiter bevorzugt Kniehebelgetriebe aufweisen. Diese Antriebe können weiter bevorzugt Gewindespindel/Gewindemutter-Kombinationen aufweisen. Diese Antriebe können weiter bevorzugt als Kurvengetriebe ausgeführt werden. Diese Antriebe können weiter bevorzugt Ketten- und Zahnriemen umfassen. Diese Ausgestaltungen des Servoantriebs gelten sinngemäß auch für die weiteren erfindungsgemäß vorgesehenen Servoantriebe.

Nach einer bevorzugten Ausführungsform ist der servoelektrische Antrieb ein Kurbelantrieb. Der Servo-Kurbelantrieb wird zur kombinierten Vertikal- und Schwenkbewegung der Vorform von der Tropfenzuführungsposition in die Pressposition vorgesehen. Der Kurbelantrieb arbeitet zwischen zwei Totpunkten, weshalb zunächst ein sinusförmiger Bewegungsablauf erzielbar ist. Der obere Totpunkt ist durch eine große Kraftübersetzung gekennzeichnet. Im oberen Totpunkt sind Kräfte von mehreren kN erforderlich, um der Presskraft des Plungers entgegenzuwirken. Hier werden Kräfte von beispielsweise 15 kN benötigt. Durch einen servoelektrischen Antrieb in Form eines Kurbelantriebs ist es überdies möglich, die Leistung eines Antriebsmotors von etwa 4 KW auf unter 1 KW zu reduzieren.

Darüber hinaus kann der Servoantrieb als servo-pneumatischer und/oder servohydraulischer Antrieb ausgebildet sein.

Es ist weiterhin bevorzugt, dass alle Antriebselemente miteinander synchronisierbar sind.

Der - bevorzugt dezentral ausgestaltete - wenigstens eine Servoantrieb des Vorformbewegungsmechanismus kann am Karussell, am Segment desselben oder an sonstigen Bauteilen desselben angeordnet sein.

In der Steuerung der Vorrichtung für die Synchronisation des Servoantriebs oder der Servoantriebe sind elektronische (spielfreie) Getriebe sowie Geschwindigkeitsprofile hinterlegt, mit denen Bewegungsabläufe zu anderen Baugruppen, etwa dem Karussell oder der Zuführungseinrichtung, geschwindigkeits-, winkelsynchron und wiederholgenau gesteuert werden. Hierdurch wird die Genauigkeit der Speisung des Glastropfens aus der Zuführeinrichtung in die Vorform erheblich verbessert. Denn hierdurch wird weitgehend vermieden, dass die Tropfenabgabe nicht mittig in die Vorform erfolgt.

Die Bewegungsgeschwindigkeit der Zuführungseinrichtung entspricht nämlich einem vorbestimmten Zeitabschnitt der Rotationsgeschwindigkeit des Karussells. Der Vorteil der Erfindung besteht darin, dass die Schwenkbewegung des Trägers der Vorform der bilateralen Geschwindigkeit des Tropfens mit Austritt des Tropfens aus der Zuführungseinrichtung und seinem Eintritt in die Vorform und der Rotationsgeschwindigkeit des Karussells präzise und leicht angepasst werden kann. Der Zeit-punkt, in dem die Zuführungseinrichtung und das Zentrum der Vorform des Karussells deckungsgleich übereinander liegen, ist der Zeitpunkt, in dem der Übergang des Tropfens von der Zuführungseinrichtung in die Vorform stattfindet. Beispielhaft kann die Umfangsgeschwindigkeit des Karussells 1200 mm/s betragen. Hierdurch ist eine laterale Bewegung von 12 mm je 1/100-tel Sekunde erreichbar. Hieraus ist erkennbar, welch großer Einfluss aus der Schwankung des Bewegungsablaufs der Vorform im Vergleich zum dem Tropfenübergabezeitpunkt auf die zentrische Lage des Tropfens in der Vorform resultiert.

Eine weitere Ausführungsform der Erfindung sieht vor, dass der Bewegungsablauf spiegelbildlich von der zur Bewegung der der Formung des Hohlkörpers dienenden Einrichtung zur wenigstens einen Vorform erfolgt. Auch bei dieser Ausgestaltung ist der Einsatz wenigstens eines Servoantriebes sowie der weiteren, beschriebenen Baugruppen vorgesehen.

Durch den Einsatz eines oder mehrerer Servoantriebe wird folglich gewährleistet, dass die Bewegungsabläufe geschwindigkeitssynchron, winkelsynchron und wiederholgenau erfolgen.

Der Einsatz wenigstens eines Servoantriebs bei der erfindungsgemäßen Vorrichtung führt dadurch zu einer erheblichen Qualitäts- und Ertragsverbesserung bei der Herstellung von Hohlkörpern aus einer Glasschmelze.

Die mit der Verwendung eines Servoantriebs insbesondere einhergehende Möglichkeit des Einsatzes leistungsoptimierte Antriebe erlaubt des Weiteren die Standardisierung von Bauteilen. So können insbesondere derartige leistungsoptimierte Antriebe mehrfach in derartigen Vorrichtungen verwendet werden. Dies reduziert die Investitionskosten durch geringere Ausgaben für Ersatzteile und es erhöht die Anlagenverfügbarkeit durch Standardisierung. Auf den Einsatz von großvolumigen pneumatischen Zylindern kann verzichtet werden, ebenso auf die beschriebenen Stoßdämpfer.

Der Einsatz eines Servoantriebs führt ferner zur Verkürzung der Einstellzeiten und darüber hinaus zu reproduzierbaren Abläufen. Durch Erhöhung der damit verbundenen Effektivität werden weitergehend Kosten gespart.

Ferner reduziert der Einsatz eines derartigen Servoantriebes das bisher hohe Unfallrisiko und führt zu einer Verringerung der Arbeitsplatzbelastung für das Bedienpersonal.

Im Zusammenhang mit der vorliegenden Erfindung umfasst der Trägermechanismus neben einem Antrieb insbesondere einen Träger zur Bewegung der Vorform bzw. zur Bewegung des den Kölbel unterstützenden Bodens. Es werden dabei getrennte Trägermechanismen in Bezug auf die Vorform sowie in Bezug auf den Boden verwendet. Der Begriff des Trägermechanismus umfasst weiterhin die rollende Führung und die rollende Zentrierungen, die an Stelle im Stand der Technik verwendeter Gleitführungen, welche einem erhöhten Verschleiß ausgesetzt sind.

Die rollende Führung und/oder die rollende Zentrierung verbindet vorzugsweise eine Hauptachse, an deren unterem Ende der Vorformträger bzw. der den Kölbel unterstützende Boden angeordnet ist, mit der insbesondere eine Nut oder eine Kurvenbahn aufweisenden Führung und/oder Zentrierung einer Führungsschiene, bevorzugt mit Nutführung. Diese Führung weist erfindungsgemäß einen in sich verdrehten Verlauf auf. Durch diese Verbindung der Hauptachse und der Führung wird ein spielfreier, präziser Bewegungsablauf des Vorformträgers bzw. des Bodens gewährleistet. Darüber hinaus findet eine Begrenzung der axialen Bewegung der Hauptachse relativ zum Gehäuse der Vorrichtung statt. Gleichzeitig bewirkt die Verdrehung der Führung in sich eine vorbestimmte Drehung der Hauptachse um ihre eigene Achse.

Es sind zwei Rollen vorgesehen. Die Erfindung sieht dabei vor, dass die rollende Führung und/oder Zentrierung mindestens eine einstellbare Rolle umfasst, die spielfrei in einer Nut und/oder auf einem Kurvenstück abrollt. Hierbei sind auf einer Welle wenigstens je zwei Rollen über je ein Kugellager angeordnet, wobei eine Rolle gegenüber der Mittelachse exzentrisch angeordnet ist und die andere Rolle mittig auf der Welle angeordnet. Durch die Exzentrizität dieser Rollen zueinander werden in den Arbeitsstellungen für Vorform und Boden Zentrierung und damit die die Winkelgenauigkeit erreicht. Das Einspannen beider Rollen erfolgt in der Nutführung. Die Nutführung ist in diesen Bereichen entsprechend eng toleriert.

Die Rollen können die Form von Scheiben, Rädern, Laufrollen, Laufrädern, Zahnrädern in einer nach innen gezahnten Nut, Walzen, Trommeln oder sonstige Gestaltungen aufweisen, die insbesondere in einer Nut oder auf einer Kurvenbahn, insbesondere auf einer Welle kugelgelagert, abrollen können.

Eine solche Konstruktionsweise erweist sich als vorteilhaft, da mithilfe des erfindungsgemäßen Trägermechanismus die Bewegung des Bodens bzw. der Vorform spielfrei realisierbar ist. Zusätzlich kann eine definierte Schmierung erfolgen und der Verschleiß signifikant verringert werden, wodurch die Lebensdauer der Bauteile insgesamt erhöht wird und die wartungsfreie Produktionszeit verlängert wird. Hierdurch wird erreicht, dass die Schwenkbewegung zwischen der Tropfenzuführungspositionen und der Pressposition spielfrei und kontrolliert schmierbar ist. Rollende Führungen und Zentrierungen sind gegenüber Gleitführungen weniger verschleißanfällig. Vorzugsweise kann dabei mindestens eine der beiden Endlager über fernverstellbare Elemente der Nut oder des Kurvenstücks verfügen.

Mithilfe der Erfindung wird erreicht, dass die Vorform in Bezug auf ihre Arbeitspositionen, nämlich in Bezug auf die Tropfenzuführungsposition und auf die Pressposition, jeweils eine exakte Winkel-Position und Höhen-Position einnimmt.

In Bezug auf den Boden erweist sich die Erfindung als vorteilhaft, da der Boden zur Unterstützung des Kölbels im Blasprozess eine vorbestimmte Position winkel- und höhengenau einnimmt. Auf diese Weise gewährleistet die Erfindung, dass die Vorrichtung zur Herstellung von Hohlkörpern Glaskörper höchster Qualität und Güte erzeugt.

Vorzugsweise verfügt mindestens eine der beiden Endstellungen über fernverstellbare Elemente der Nut oder des Kurvenstücks.

In einer anderen bevorzugten Ausführungsform der Erfindung ist zur Bewegung der Vorform von der Tropfenzuführungsposition in die Pressposition und/oder zur Bewegung des Bodens unter den Kölbel im Zusammenhang mit dem Blasvorgang wenigstens ein Roboter vorgesehen.

Es hat sich überraschend gezeigt, dass die erfindungsgemäßen Vorrichtungen besonders effektiv arbeiten, wenn sie als Roboter ausgebildet sind. Unter einem Roboter versteht die Erfindung jeglichen Bewegungsautomaten mit einer oder mehreren Achsen. Es kann sich hierbei auch um Maschinen auf der Basis der NC-Technologie oder CNC-Technologie handeln. Insbesondere werden solche Bewegungsautomaten hierunter verstanden, deren Bewegungen hinsichtlich Bewegungsfolge und Wegen bzw. Winkeln frei programmierbar und gegebenenfalls sensorgeführt sind. Sie können vorzugsweise mit Greifern, Trägern, Magnete oder anderen Fertigungsmitteln ausrüstbar sein und Handhabungs- und/oder Fertigungsaufgaben ausführen. Besonders bevorzugt ist eine solche Vorrichtung, die über mindestens drei frei bewegliche Achsen verfügt. Aber auch Handhabungsgeräte, die über kein Computerprogramm verfügen, sondern direkt vom Bediener geführt werden, werden als Roboter im Sinne der Erfindung verstanden. Die Bewegungsautomaten können insbesondere vorzugsweise nach einem konstanten Bewegungsmuster arbeiten. Weiter bevorzugt ist es, wenn dieses Bewegungsmuster schnell, und problemlos geändert werden kann. Ferner werden hierunter Bewegungsautomaten verstanden, die vorzugsweise über verschiedene Sensoren verfügen und damit in der Lage sind, den Programmablauf selbsttätig den Veränderungen der zu formenden Hohlkörper und/oder den bei ihrer Herstellung vorhandenen Einsatzbedingungen anzupassen.

Insbesondere bevorzugt ist, dass der Trägermechanismus ein Roboter ist. Alternativ kann es vorgesehen sein, die vorstehenden Bewegungsabläufe sinngemäß in umgekehrter Richtung vorzunehmen, also die Presseinrichtung und/oder die kombinierte Press-Blaseinrichtung zur Vorform hin zu bewegen bzw. die Blaseinrichtung und/oder die kombinierte Press-Blaseinrichtung hin zum Boden zu bewegen.

Für den Fall, in dem der Trägermechanismus, mittels eines Vorformträgers eine Vorform, die der Aufnahme eines Tropfens einer Glasschmelze dient, zwischen wenigstens zwei Arbeitspositionen bewegt, kann die Vorform in einer definierten Warteposition am Segment der Presseinrichtung bzw. der Blaseinrichtung positioniert sein. Der Roboter nimmt die Vorform auf, insbesondere greift er sie, und bewegt diese in die Tropfenzuführungsposition. Hierbei kann der Roboter die Vorform entgegen der Umfangsgeschwindigkeit des Karussells bewegen, wodurch eine deutliche Verringerung der absoluten Geschwindigkeit der Vorform erreicht wird. Durch diese verringerte Geschwindigkeit wird die Qualität der Tropfenzuführung gravierend verbessert. Hierauf bewegt der Roboter vorzugsweise die Vorform mit dem Tropfen hin zur Presseinrichtung.

Es kann vorgesehen sein, dass die Vorform durch eine Einrichtung an einer der Formung des Hohlkörpers dienenden Presseinrichtung und/oder Blaseinrichtung und/oder einer kombinierten Press-Blaseinrichtung fixiert wird.

Die Einrichtung kann die Fixierung pneumatisch, magnetisch, mechanisch oder hydraulisch oder aus Kombinationen hieraus realisieren. Die Fixierung kann lösbar sein. Hierauf erfolgt die Formung des Kölbels durch die Presseinrichtung oder eine kombinierte Press-Blaseinrichtung. Nach dem Pressvorgang nimmt der Roboter die Vorform in der Presseinrichtung und/oder in der kombinierten Press-Blaseinrichtung auf und führt die Vorform wieder in die Warteposition zurück.

In dem Fall, in dem der Träger des Trägermechanismus der Bewegung eines Bodens dient, greift der Roboter vorzugsweise den Boden aus einer definierten Warteposition an einem Segment der Press-Blasmaschine und bewegt den Boden durch einen vordefinierten Bewegungsablauf unter den Kölbel. Durch die vertikale Bewegung des Bodens unter dem sich durch Schwerkraft auslängenden Kölbel kann die Formung des Kölbels positiv gesteuert werden. Hierauf erfolgt die Fertigformung des Hohlkörpers durch die Blaseinrichtung oder der kombinierten Press-Blaseinrichtung. Nachfolgend setzt der Roboter den Boden wieder in die definierte Warteposition.

Es kann weiter vorgesehen sein, dass der Roboter den fertig geformten Hohlkörper mit seinem Greifer aus der Blaseinrichtung oder einer kombinierten Press-Blaseinrichtung entnimmt und einer weiteren nicht näher beschriebenen Transporteinrichtung zuführt.

Den vorgeschilderten Greifbewegungen im Sinne der vorliegenden Erfindung sind auch solche Bewegungsabläufe, gleichgestellt, die durch andere Aufnahmemittel bewerkstelligt werden. Hierbei kommen z.B. Sauger, Magnete in Betracht. Die Aufnahmemittel, insbesondere die Greifer, können entsprechend der zu handhabenden Gegenstände, z.B. Vorform, Boden oder Hohlkörper, gewechselt, angepasst und eingestellt werden.

Die vorstehenden Ausführungsformen erweisen sich als vorteilhaft, weil der beschriebene Roboter aufwendige mechanische Baugruppe, z.B. Vorformmechanismus und Bodenhubmechanismus, funktional ersetzt. Ein weiterer Vorteil besteht in der einfachen Umschaltung bzw. Änderung des Bewegungsablaufes und einer vergleichsweise schnellen Anpassung an verschiedene Vorformen und Hohlkörperformen.

Durch die Verwendung von Robotern werden darüber hinaus alle dem Stand der Technik anhängenden negativen Eigenschaften, wie z.B. schlechte Reproduzierbarkeit von pneumatischen Zylindern, deren hoher Verschleiß, damit verbundene Produktionsausfälle und vor allen Dingen die Gefährdung im Arbeitsablauf eliminiert.

Überdies kann vorgesehen sein, dass der Roboter elektronisch an einen Hauptantrieb der Herstellungsmaschine gekoppelt ist. Diese Konstruktionsweise erweist sich deshalb als besonders vorteilhaft, da eine einfache Umschaltung bzw. Änderung des Bewegungsablaufes und ein schnelle Anpassung an verschiedene Artikel und Formen möglich wird.

In einer alternativen Ausführungsform der Erfindung ist der Roboter stationär außerhalb eines Karussells der Vorrichtung zur Herstellung von Glaskörpern angeordnet. Der Roboter kann in dieser Ausgestaltung beim Betrieb der Vorrichtung gezielt von außen in das Karussell eingreifen und die Bewegung der Vorform bzw. die Bewegung des unterstützenden Bodens ausführen. In diesem Fall vollzieht der Roboterfuß die kontinuierlichen Umlaufbewegungen des Karussells nicht nach.

Die stationäre Anordnung des wenigstens einen Roboters außerhalb der vorerwähnten Maschinenbaugruppen erfüllt dieselben Vorteile wie im Falle seiner mit dem Karussell mitlaufenden Anordnung; darüber hinaus gewährleistet die dezentrale und mechanisch entkoppelte Bauweise einen einfachen Wechsel des Roboters bzw. eine einfache Wartung ohne zeitraubende Demontage am Karussell.

Im Folgenden soll die Erfindung beispielhaft, ohne Beschränkung der Allgemeinheit anhand eines in der Zeichnung dargestellten Ausführungsbeispiels näher erläutert werden.

Hierbei zeigen jeweils in schematischer Darstellung:
Fig. 1 zeigt die erfindungsgemäße rollierende und in einer Nut verlaufende Führung und Zentrierung,
Fig.2 zeigt den Trägermechanismus mit Vorform-Träger und Servoantrieb,
Fig. 3 zeigt den Trägermechanismus mit Boden-Träger und-Servoantrieb,
Fig. 4 zeigt einen Hohlkörper während der Formung jeweils in der Tropfen Zuführungseinrichtung, in der Press Position und in der Blaseinrichtung der erfindungsgemäßen Vorrichtung,
Fig. 5 zeigt eine patentgemäße Vorrichtung auf einem Karussell mit einem außenstehenden Roboter,
Fig. 6 zeigt eine patentgemäße Vorrichtung mit einem Karussell und hierauf angeordneten Robotern.

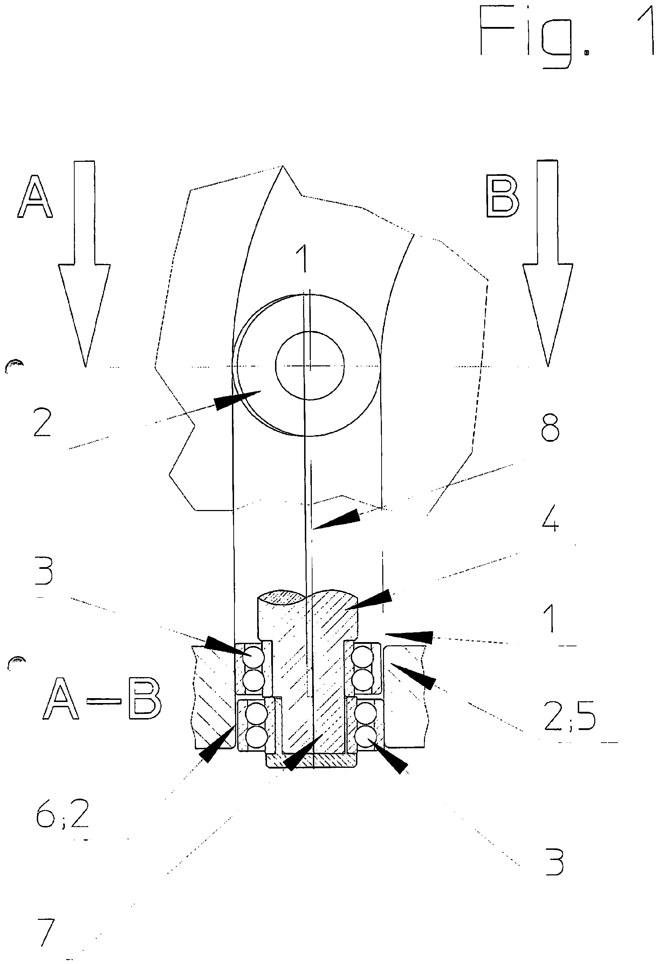

Fig. 1 zeigt die erfindungsgemäße und in einer Nut 1 verlaufende rollende Führung und eine rollende Zentrierung 2. Die Führung und Zentrierung 2 ist dabei in Form zweier, über Kugellager 3 auf einer Welle 4 gelagerte und hintereinander angeordnete Rollen, insbesondere Scheiben 5; 6 dargestellt. Die vordere Scheibe 5 sitzt dabei mittig auf der Welle 4, wogegen die rückwärtige Scheibe 6 in der Weise exzentrisch auf der Welle 4 sitzt, dass der Mittelpunkt 7 der exzentrischen Scheibe 6 außerhalb der Wellenachse 8 liegt. Es werden mindestens zwei einstellbare Rollen verwendet, welche spielfrei in einer Nut oder auf einem Kurvenstück (nicht gezeigt) abrollen. Fig. 1 zeigt weiterhin einen Schnitt in der Ebene A-B durch zwei in einer Nut befindliche, hintereinander angeordnete rollende Führungen und Zentrierungen.

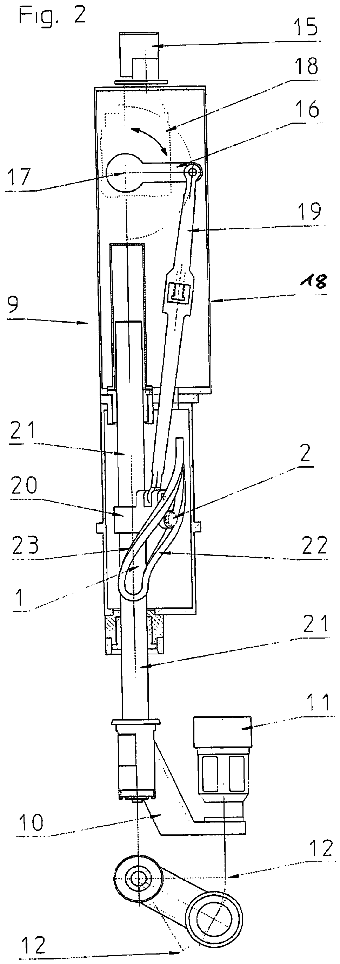

Die Fig. 2 zeigt einen Trägermechanismus 9, der mittels eines Vorform-Trägers 10 eine Vorform 11 zwischen zwei Endpunkten 12 einer Nut 1 oder einer Kurvenbahn 1 bewegt.

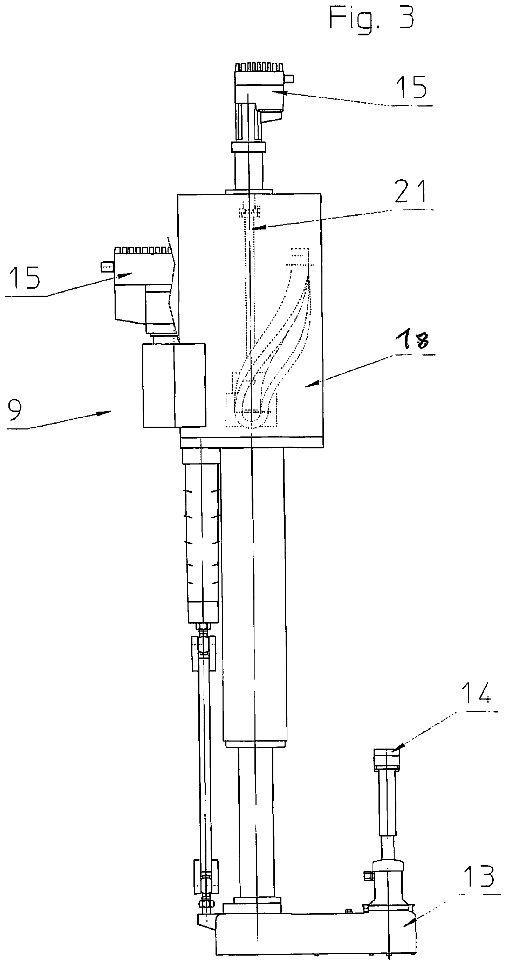

Fig. 3 zeigt den Trägermechanismus 9, der in analoger Form zur Bewegung der Vorform 11 einem in einem Glasherstellungsverfahren befindlichen Kölbel (nicht gezeigt) mittels eines Boden-Trägers 13 einen unterstützenden Boden 14 zuführt.

In beiden Fig. 2 und 3 ist jeweils eine Nut 1 bzw. ein Kurvenstück 1 vorgesehen. Im Weiteren wird vereinfachend auf eine Nut 1 Bezug genommen. In beiden Fig. 2 und 3 ist ein Gehäuse 18 vorgesehen, in dem ein Servoantrieb 15 einen Kurbelarm 16 um eine Schwenkachse 17 in eine Schwenkbewegung versetzt. An dem von der Schwenkachse 17 abgewandten Ende des Kurbelarms 16 ist ein Pleuel 19 angelenkt. Mit seinem anderen Ende ist das Pleuel 19 über eine Manschette 20 an einer in einem Gehäuse 18 geführten Hauptachse 21 befestigt. An der Manschette 20 ist eine rollende Führung und Zentrierung 2 angeordnet, die in eine Nut 1 einer Führungsschiene 22 eingreift. Mit Betätigung des Servoantriebs 15, schiebt/zieht der Kurbelarm 16 das Pleuel 19 in dem Gehäuse 18 in Richtung des Trägers 10; 13 zu der vom Träger abgewandten Seite des Gehäuses 18. Dadurch wird der mit der Hauptachse 21 verbundene Vorform-Träger 10 bzw. der Boden-Träger 13 axial zum Gehäuse 18 bewegt. Die an der Manschette 20 angeordnete Führung und Zentrierung 2 greift in eine Nut 1 einer Führungsschiene 22 ein, die im Inneren des Gehäuses 18 angeordnet ist. Die in Fig. 2 und 3 dargestellte Führungsschiene 22 weist einen mehrfach gekrümmten Kurvenverlauf 23 auf, wobei die beiden Hälften der Führungsschiene 22 um die Längsachse der Führungsschiene 22 gegeneinander verdreht sind. Mit Bewegung des Kurbelarms 16 vollzieht die Hauptachse 21 mit dem daran befestigten Träger 10; 13 relativ zum Gehäuse 18 eine axiale Bewegung. Aufgrund der Führung und Zentrierung 2 in der Nut 1 der gekrümmten Führungsschiene 22 erfährt die Hauptachse 21 zusätzlich zur Axialbewegung noch eine Radialbewegung um ihre eigene Achse. Die Radialbewegung ist dabei durch die Länge und die Krümmung der Führungsschiene 22 bestimmt.

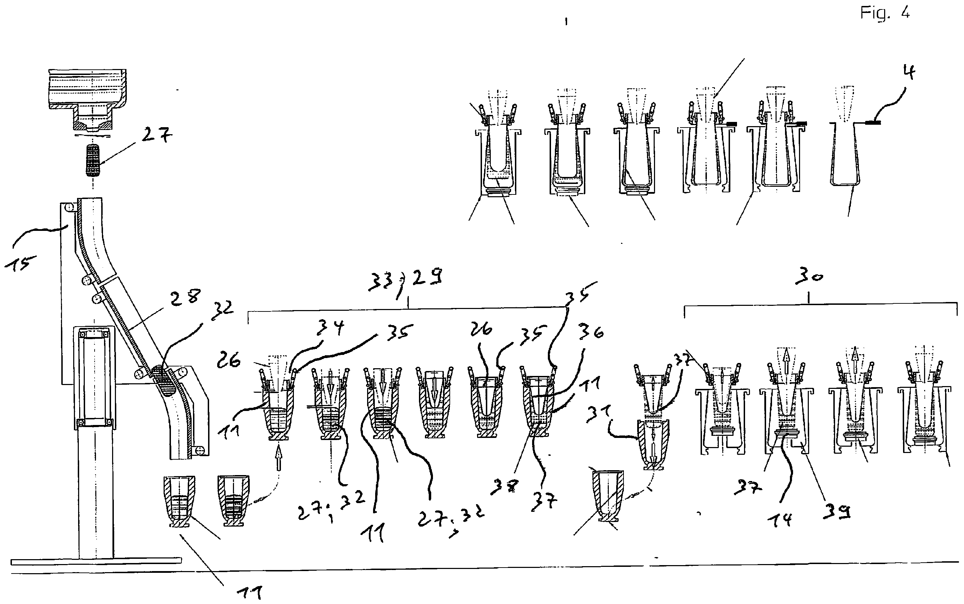

Fig. 4 zeigt eine Glasschmelze 27, eine Tropfenzuführungseinrichtung 28, sowie eine Presseinrichtung 29 und eine Blaseinrichtung 30 der erfindungsgemäßen Vorrichtung zur Herstellung von Hohlkörpern 31. Im Bereich der Glasschmelze 27 ist ein Tropfen 32 einer Glasschmelze dargestellt, der nach Durchlauf einer Zuführungseinrichtung 28 in eine, in einer Tropfenzuführungspositionen 28 befindliche, Vorform 11 eingespeist wird. Die Zuführungseinrichtung 28 weist dabei einen mit 15 bezeichneten Servoantrieb auf. Im Bereich der Presseinrichtung 29 befindet sich der Tropfen 32 in Pressposition 33. In Pressposition 33 fährt ein Plunger 26 in die Vorform 11 ein. Am oberen offenen Rand 34 der Vorform 11 ist ein Neckring 35 angeordnet. Entgegen der Bewegung des Plungers 26 wird die Glasschmelze 27 in der Pressposition 33 in der Vorform 11 zwischen der Außenwand des Plungers 26 und der Innenwand 36 der Vorform 11 in Richtung des Neckrings 35 gepresst. Auf diese Weise entsteht im Inneren der Vorform 11 ein Vorformling (Kölbel 37). In der Ablösungsstellung 38, vor dem Überwechseln des Kölbels 37 von der Presseinrichtung 29 in die Blaseinrichtung 30 wird der Kölbel 37 vom Neckring 35 gehalten und die Vorform 11 vom Kölbel 37 abgelöst. In der Blaseinrichtung 30 umgreift die Fertigform 39 den Kölbel 37. In der Fertigform 39 ist in Fig. 4 ein Boden 14 dargestellt, der die durch die Schwerkraft und die Zuführung von Druckluft bedingte Längenausdehnung des Kölbels 37 begrenzt. Eine mit 4 bezeichnete Greiferzange übernimmt den Kölbel aus seiner Halterung im Neckring und führt ihn der weiteren Bearbeitung zu.

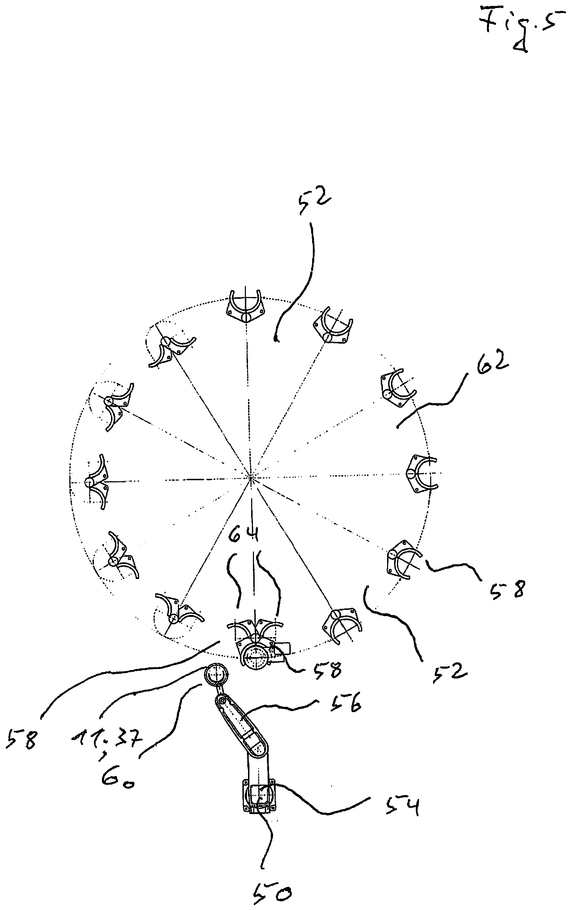

Fig. 5 zeigt ein Karussell 62 in Draufsicht mit Segmenten 52. Jedem Segment 52 ist jeweils eine Fertigform 58 zugeordnet. Die Fig. 5 zeigt die Fertigform 58 mit geöffneten Hälften 64. Im Bereich einer Fertigform 58, deren Hälften 64 geöffnet sind ist ein im Verhältnis zum Karussell 62, außen stehender Roboter 50 angeordnet. Der Roboter 50 umfasst eine Basis 54 und einen Trägerarm 56. An dem von der Basis 54 abgewandten Seite des Trägerarms 56 ist ein Greifer 60 erkennbar. Der Greifer 60 fasst eine Vorform 11. Der in der Fig. 5 dargestellte Trägerarm 56 befindet sich zur Übergabe des Kölbels 37 von der Vorform 11 auf die Fertigform 58 des Segments 52 im Bereich der geöffneten Hälften 64 der Fertigform 58.

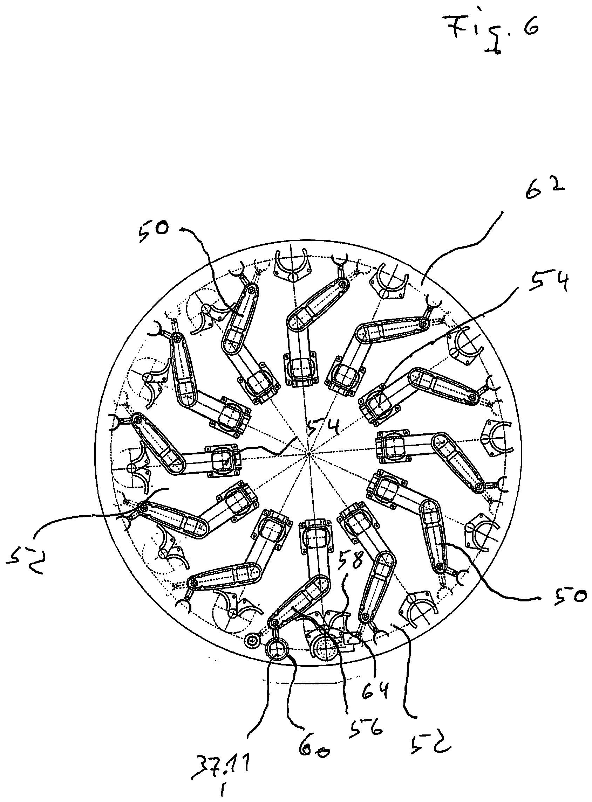

Fig. 6 zeigt in Draufsicht das Karussell 62 mit einer Vielzahl von Segmenten 52. Jedem der Segmente 52 ist jeweils ein Roboter 50 zugeordnet. Beispielgebend für die Vielzahl der Roboter 50 wird auf denjenigen Roboter 50 Bezug genommen, der eine Vorform 11 mit seinem Greifer 60 hält. Die Basen 54 der Roboter 50 sind kreisförmig im Bereich des Zentrums des Karussells 62 angeordnet. Der Roboter 50, in dessen Greifer 60 die Vorform 11 erkennbar ist, befindet sich mit seinem Trägerarm 56 zur Übergabe des Kölbels 37 von der Vorform 11 auf die Fertigform 58 des Segments 52 im Bereich der geöffneten Hälften 64 der Fertigform 58.

### Bezugsziffern

- 1: Nut
- 2: Zentrierung
- 3: Kugellager
- 4: Welle
- 5 und 6: Scheibe
- 7: Mittelpunkt
- 8: Wellenachse
- 9: Trägermechanismus
- 10: Vorformträger
- 11: Vorform
- 12: Endpunkt
- 13: Bodenträger
- 14: Boden
- 15: Servoantrieb
- 16: Kurbelarm
- 17: Schwenkachse
- 18: Gehäuse
- 19: Pleuel
- 20: Manschette
- 21: Hauptachse
- 22: Führungsschiene
- 23: Kurvenverlauf
- 24 25: Blaseinrichtung
- 26: Plunger
- 27: Glasschmelze
- 28: Tropfenzuführungseinrichtung
- 29: Presseinrichtung
- 30: Blaseinrichtung
- 31: Hohlkörper
- 32: Tropfen
- 33: Pressposition
- 34: offener Rand
- 35: Neckring
- 36: Innenwand der Vorform
- 37: Kölbel
- 38: Ablösungsstellung
- 39: Fertigform
- 40: Greiferzange
- 50: Roboter
- 52: Segment
- 54: Basis
- 56: Trägerarm
- 58: Fertigform
- 60: Greifer
- 62: Karussell
- 64: Hälfte

## Patentansprüche

1. Vorrichtung zur Herstellung von Hohlkörpern aus einer Glasschmelze (27) mit wenigstens einem Karussell und mit wenigstens einem, wenigstens einen Antrieb aufweisenden Trägermechanismus (9), der mittels eines Trägers (10) eine Vorform (11), die der Aufnahme eines Tropfens (32) einer Glasschmelze (27) dient, zwischen wenigstens zwei Arbeitspositionen bewegt, **dadurch gekennzeichnet, dass**
- der wenigstens eine Antrieb (15) des Trägermechanismus (9) wenigstens ein servoelektrischer Antrieb (15) ist
- und der Träger (10) der Vorform (11) über eine Führungsschiene (22), die einen mehrfach gekrümmten Kurvenverlauf (23) aufweist, wobei die beiden Hälften der Führungsschiene (22) gegeneinander verdreht sind, eine Radialbewegung durchführt, die durch die Länge und die Krümmung der Führungsschiene (22) bestimmt wird.

2. Vorrichtung nach Anspruch 1, **dadurch gekennzeichnet, dass** der Trägermechanismus (9) weiterhin mittels eines Trägers (13) der Zuführung eines den Kölbel (37) unterstützenden Bodens (14) dient.

3. Vorrichtung nach einem oder mehreren der vorhergehenden Ansprüche, **dadurch gekennzeichnet, dass** der servoelektrische Antrieb (15) ein Torquemotor und/oder ein Linearmotor ist.

4. Vorrichtung nach einem oder mehreren der vorhergehenden Ansprüche, **dadurch gekennzeichnet, dass** der servoelektrische Antrieb (15) ein Kurbelantrieb ist.

5. Vorrichtung nach einem oder mehreren der vorhergehenden Ansprüche, **dadurch gekennzeichnet, dass** der Antrieb (15) servopneumatisch und/oder servohydraulisch ist.

6. Vorrichtung nach einem oder mehreren der vorhergehenden Ansprüche, **dadurch gekennzeichnet, dass** der servoelektrische Antrieb (15) dezentral ausgestaltet ist.

7. Vorrichtung nach einem oder mehreren der vorhergehenden Ansprüche, **dadurch gekennzeichnet, dass** alle Antriebselemente (15) synchronisierbar sind.

8. Vorrichtung nach Anspruch 1, **dadurch gekennzeichnet, dass** die Führungsschiene (22) eine rollende Zentrierung (2) aufweist, die mindestens zwei einstellbare Rollen/Scheiben (5; 6) umfasst, die spielfrei in einer Nut (1) und/oder auf einem Kurvenstück (1) abrollen.

9. Vorrichtung nach Anspruch 8, **dadurch gekennzeichnet, dass** mindestens eine der beiden Endlagen über fernverstellbare Elemente der Nut (1) oder des Kurvenstücks (1) verfügt.

## Claims

1. Device for producing hollow bodies from a glass melt (27) with at least one rotary indexing table and with at least one carrier mechanism (9) which has at least one drive and which moves a blank mold (11) serving the purpose of receiving a gob (32) of a glass melt (27) between at least two operating positions by means of a carrier (10), **characterized in that**
- the at least one drive (15) of the carrier mechanism (9) is at least one servo-electric drive (15),
- and the carrier (10) of the blank mold (11) performs a radial movement across a guide rail (22) having a multi-curved shape (23), wherein the two halves of the guide rail (22) are twisted against each other, with said radial movement being determined by the length and the curvature of the guide rail (22).

2. Device according to claim 1, **characterized in that** the carrier mechanism (9) further serves the purpose of carrying a base (14) supporting the parison (37) by means of a carrier (13).

3. Device according to one or more of the preceding claims, **characterized in that** the servo-electric drive (15) is a torque motor and/or a linear motor.

4. Device according to one or more of the preceding claims, **characterized in that** the servo-electric drive (15) is a crank drive.

5. Device according to one or more of the preceding claims, **characterized in that** the drive (15) is a servo-pneumatic and/or servo-hydraulic drive.

6. Device according to one or more of the preceding claims, **characterized in that** the servo-electric drive (15) is configured in a decentralized manner.

7. Device according to one or more of the preceding claims, **characterized in that** all drive elements (15) are capable of being synchronized.

8. Device according to claim 1, **characterized in that** the guide rail (22) has a rolling centering device (2) which comprises at least two adjustable rolls/disks (5; 6) rolling in a groove (1) and/or on a curve portion (1) in a manner free from play.

9. Device according to claim 8, **characterized in that** at least one of the two end positions is equipped with remotely adjustable elements of the groove (1) or the curve portion (1).

## Revendications

1. Dispositif de fabrication de corps creux à partir de verre en fusion (27), comportant au moins un carrousel et au moins un mécanisme support (9) présentant au moins un entraînement, lequel déplace entre au moins deux positions de travail au moyen d'un support (10) une préforme (11) qui sert à recevoir une goutte (32) d'un verre en fusion (27), **caractérisé en ce que**
- ledit au moins un entraînement (15) du mécanisme support (9) est au moins un entraînement servoélectrique (15)
- et **en ce que**, par l'intermédiaire d'un rail de guidage (22) qui présente une allure de courbe (23) à plusieurs courbures, les deux moitiés du rail de guidage (22) présentant une torsion l'une par rapport à l'autre, le support (10) de la préforme (11) exécute un mouvement radial qui est déterminé par la longueur et la courbure du rail de guidage (22).

2. Dispositif selon la revendication 1, **caractérisé en ce que** le mécanisme support (9) sert en outre, au moyen d'un support (13), à l'amenée d'un fond (14) soutenant la paraison (37).

3. Dispositif selon l'une et/ou plusieurs des revendications précédentes, **caractérisé en ce que** l'entraînement servoélectrique (15) est un moteur à couple et/ou un moteur linéaire.

4. Dispositif selon l'une et/ou plusieurs des revendications précédentes, **caractérisé en ce que** l'entraînement servoélectrique (15) est un entraînement à bielle.

5. Dispositif selon l'une et/ou plusieurs des revendications précédentes, **caractérisé en ce que** l'entraînement (15) est servopneumatique et/ou servohydraulique.

6. Dispositif selon l'une et/ou plusieurs des revendications précédentes, **caractérisé en ce que** l'entraînement servoélectrique (15) est agencé de manière décentralisée.

7. Dispositif selon l'une et/ou plusieurs des revendications précédentes, **caractérisé en ce que** tous les éléments d'entraînement (15) peuvent être synchronisés.

8. Dispositif selon la revendication 1, **caractérisé en ce que** le rail de guidage (22) présente un centrage (2) roulant qui comprend au moins deux rouleaux/disques (5 ; 6) réglables qui roulent sans jeu dans une rainure (1) et/ou sur un segment de courbe (1).

9. Dispositif selon la revendication 8, **caractérisé en ce qu'**au moins une des deux positions terminales dispose d'éléments de la rainure (1) ou du segment de courbe (1), qui sont réglables à distance.
